# EUROPEAN PATENT APPLICATION

(11) **EP 3 396 837 A1**
(43) Date of publication of application: **31.10.2018**
(21) Application number: 17167948.3
(22) Date of filing: 25.04.2017
(51) Int. Cl.: H02M 3/157, H02M 3/158

(54) **APPARATUS AND METHOD FOR REGULATING AND CONTROLLING A LOAD-LINE OF A POWER CONVERTER AND A POWER SYSTEM USING THEM**

(71) Applicant: IDT Europe GmbH, 01109 Dresden (DE)
(72) Inventor: MEOLA, Marco, 80638 München (DE); KELLY, Anthony, Co. Limerick, Old Kildimo (IE)
(74) Representative: Lippert Stachow Dresden

(57) **Abstract**

The invention discloses an apparatus for regulating a load-line of a power converter and a method for controlling a load-line of a power converter. The objective of the invention to achieve a precise set-point control in a digital PWM controller under AVP operation is solved by an apparatus comprising a digital PWM controller implementing an active voltage positioning control scheme comprising a set-point digital-to-analog converter, an error amplifier, an analog-to-digital converter, a digital controller wherein a first coarse resolution path configured to drive the DAC directly with the digital signal representing the measurement of the current being delivered by the power converter and a second fine resolution path configured to carry a set-point information with an amplitude smaller than the set-point resolution of the DAC whereas the information is added to the output of the ADC converting the error signal into a digital error signal. It is also solved by a method using the above mentioned apparatus. (Fig. 5)

## Description

The invention discloses an apparatus for regulating a load-line of a power converter and a method for controlling a load-line of a power converter.

The invention discloses also a power system with a plurality of power converters connected in parallel.

Voltage regulators supplying high power computing units such as microprocessors, digital signal processors (DSPs) etc., are required to provide tight regulation of the supply voltage of the computing unit under high load current condition with high dynamic slew rates. These requirements pose a stringent challenge to the voltage regulator, especially in the transient response. The use of many output capacitors is then mandatory to reduce the voltage spikes during the transient phase thus increasing system cost and board area. The drawbacks are the elevation of cost of bill of material and the board space taken by the many capacitors.

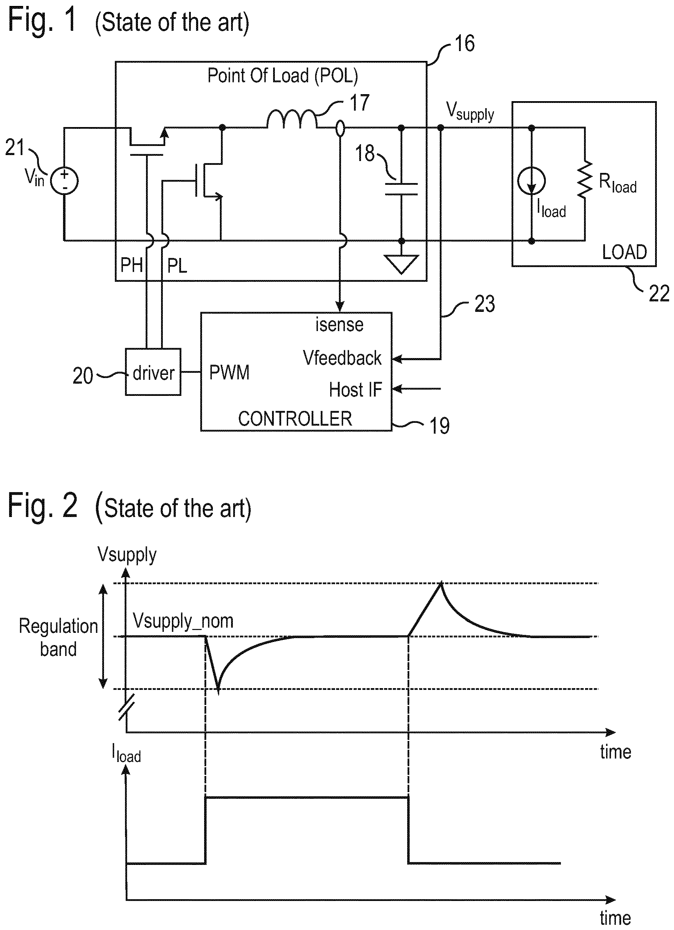

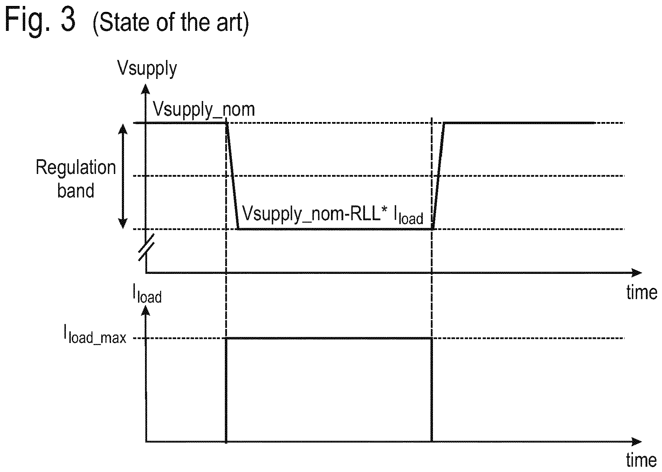

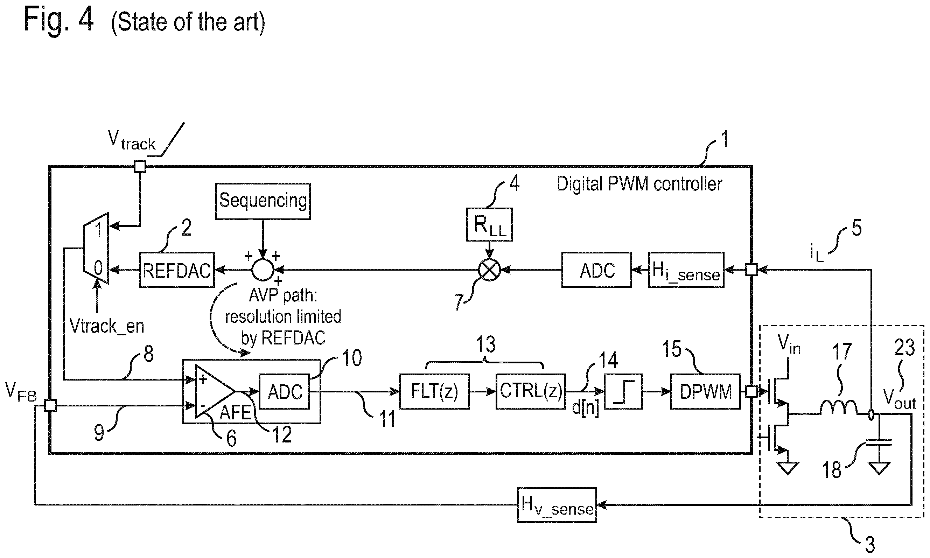

Typically, voltage regulators regulate the supply voltage to be at the center of a predefined voltage tolerance band. Figure 1 shows a power system or voltage regulator with a single power converter. The power system comprises a power converter comprising a point of load unit 16 supplying a load 22, a power controller 19, a driver 20 driving the point of load 16 and an input voltage unit 21. As shown on figure 2 regulating the supply voltage to be at the center of a predefined voltage tolerance band means that only half of such tolerance band is available to suppress voltage spikes due to load transients. As a consequence required controller performance increase with the shrink of the voltage tolerance band. To relax the requirements on the regulation performance a control scheme called Active Voltage Positioning (AVP) is being adopted in the industry (figures 3 and 4). Such control method allows to regulate the supply voltage such that its value is slightly lower than the maximum allowed value at light load and slightly higher than the minimum allowed value at high load (figure 3). Under AVP operation the voltage regulator can take advantage of the full voltage tolerance band to suppress the effect of load transients on the regulated voltage thus halving the number of output capacitors, reducing the output power at full load and therefore reducing system cost and board area. AVP can be achieved using droop control, i.e. adaptively adjusting the load-line of the power converter (figure 4).

In order to take full advantage of AVP control scheme precise control of the regulated voltage is required to position the supplied voltage as close as possible to the upper and lower boundaries of the voltage tolerance band (see figure 3). As well, as the voltage tolerance band gets narrower requirements on the set-point accuracy become more and more important. When digital PWM controllers are used as voltage regulators, finite resolution of analog-to-digital converters (ADCs) and digital-to-analog converters (DACs) employed in the digital control loop limits the precision of the control action when in AVP operation. In particular, in a digital PWM controller the desired set-point value is typically controlled by mean of a dedicated DAC. As the requirements on the resolution of the set-point become more stringent these gets directly reflected to the resolution requirements of the set-point DAC. Such requirements, together with the need of preserving DAC linearity and monotonicity characteristics, make the design of the set-point DAC very challenging at the expense of an increase of power consumption and chip area. Figure 4 shows a digital PWM controller 1 implementing AVP control. The digital PWM controller 1 implementing an active voltage positioning control scheme comprising a set-point digital-to-analog converter 2 driven by a digital signal representing a measurement of a current 5 being delivered by a power converter 3 multiplied 7 by a load-line resistance 4 to convert the current value into a voltage value to be applied to the set-point DAC 2, an error amplifier 6 used to compare an output 8 of the set-point DAC 2 with a supply voltage to be regulated 9, an analog-to-digital converter 10 to convert the error signal 12 output by the error amplifier 6 into a digital signal 11, a digital controller 13 that generates a control signal 14 to be used to regulate both the output voltage 23 and an inductor current 5 of a power converter 3 and a digital PWM block 15 to convert the digital control signal into a pulse having a pulse-width proportional to the digital control signal and a fixed repetition period.

It is therefore an objective of the invention to achieve a precise set-point control in a digital PWM controller under AVP operation without impacting the performance requirement of the set-point DAC used in a typical digital PWM controller that do not implement AVP control scheme.

It is also an objective of the invention to use such a precise set-point control in a power system comprising a plurality of power converters connected in parallel to provide a precise set-point control under AVP and/or current balance between currents delivered by each power converter.

The objective of the invention will be solved by an apparatus for regulating a load-line of a power converter comprising a digital PWM controller implementing an active voltage positioning control scheme comprising a set-point digital-to-analog converter driven by a digital signal representing a measurement of a current being delivered by a power converter multiplied by a load-line resistance to convert the current value into a voltage value to be applied to the set-point DAC, an error amplifier used to compare an output of the set-point DAC with a supply voltage to be regulated, an analog-to-digital converter to convert the error signal output by the error amplifier into a digital signal, a digital controller that generates a control signal to be used to regulate both the output voltage and an inductor current of a power converter and a digital PWM block to convert the digital control signal into a pulse having a pulse-width proportional to the digital control signal and a fixed repetition period wherein a first coarse resolution path configured to drive the DAC directly with the digital signal representing the measurement of the current being delivered by the power converter and a second fine resolution path configured to carry a set-point information with an amplitude smaller than the set-point resolution of the DAC whereas the information is added to the output of the analog-to-digital converter (ADC) converting the error signal into a digital error signal.

A digital PWM controller implementing an active voltage positioning (AVP) control scheme comprising a set-point DAC driven by a user programmable set-point value and a digital signal representing the measurement of the current being delivered by the power converter multiplied by a scaling factor, whereas the scaling factor is the load-line resistance to convert the current value into a voltage value to be applied to the set-point DAC, an error amplifier used to compare the output of the set-point DAC with the supply voltage to be regulated, an ADC to convert the error signal output by the error amplifier into a digital signal, a digital controller that generate a control signal to be used to regulate both the output voltage and the inductor current of a buck converter and a digital PWM block to convert the digital control signal into a pulse having a pulse-width proportional to the digital control signal and a fixed repetition period (switching period).

The pulse generated by the digital PWM block is then applied through a driver circuitry to the top MOSFET of a buck converter power stage. The digital PWM controller controls the power stage of the buck converter in a way that the current flowing into the inductor equals the load current while trying to maintain the output voltage within a specified voltage tolerance band. Under AVP control the set-point value is controlled by the current flowing through the inductor multiplied for the load-line resistance. As the load current changes the digital controller acts on the power stage so that the inductor current follows the load current. Due to this the set-point value changes as well causing an error voltage between the regulated voltage and the set-point value that in turns will be corrected by the digital controller.

In a digital PWM controller the set-point value is often a digital information. Therefore, a digital-to-analog converter (DAC) is used to convert the set-point into an analog voltage. In the coarse resolution path the analog set-point is compared with the sensed supply voltage to generate the error voltage input to the controller. The error voltage is then converted back to a digital information by an ADC. But the precise set-point control requires a high resolution DAC converter, and a high resolution DAC, maintaining the characteristic of linearity and monotonicity required by the application, are complex to implement with the expense of area and power increase. Alternatively the set-point voltage can be controlled by adding the droop information to the error signal itself, but often a discrepancy between the set-point generated by the reference DAC and internal set-point, i.e. the set-point including droop contribution, may saturate the ADC output. Therefore, it is advantageous to split the control of the power converter load-line into two parallel paths: A coarse resolution path and a fine resolution path. that the coarse resolution path is defined as the path going through the set-point DAC consisting in the main part of the load-line control action. The fine resolution path, instead, is adding remaining information of the load-line control action to the error voltage for fine adjustment of the set-point value. So, the load-line control has no impact of the resolution requirements of the reference DAC and high set-point resolution can be achieved. This technique prevents the ADC from saturation since magnitude of the fine resolution load-line control action is one or few last significant bit (LSB) of the reference DAC.

In one embodiment the controlled power converter is a buck converter.

In a preferred embodiment the fine resolution path comprises means for adding an offset to the digital error signal, whereas the offset is corrected by the digital controller by driving the regulated voltage to a desired set-point.

It is particularly advantageous that the first coarse resolution path and the second fine resolution path are configured in parallel. So the first coarse resolution path and the second fine resolution paths are performed at the same time.

The object of the invention will also be solved by a method for controlling a load line of a power converter to a desired set-point value using the apparatus according to claim 1 comprising the following steps: firstly, driving a digital-to-analog converter (DAC) directly with a digital signal representing the measurement of a current being delivered by a power converter in a first coarse resolution path, secondly, carrying a set-point value information for a digital PWM controller with an amplitude smaller than a set-point resolution of the DAC whereas the information is added to an output of an analog-to-digital converter converting the error signal into a digital error signal in a second fine resolution path and thirdly, correcting the offset by a digital controller by driving the regulated voltage to the desired set-point value.

So, the control path driving the set-point DAC is divided into two paths: a coarse resolution path, driving the set-point DAC directly, and a fine resolution path. The fine resolution path carries the set-point information with amplitude smaller than the set-point DAC resolution. Such information is added to the output of the ADC converting the error signal into a digital error signal. Being the error signal the difference between the set-point DAC value and the regulated voltage the fine resolution path can be seen as adding an offset to the digital error signal, offset that the digital controller corrects for by driving the regulated voltage to the desired set-point. By means of the fine resolution path it is then possible to precisely control the set-point voltage because the resolution of the set-point value is now only dependent on the internal resolution of the digital error signal, resolution that can be tailored to the set-point control requirements.

In a preferred embodiment of the inventive method, the resolution of the set-point value is only dependent on the resolution of the digital error signal in the fine resolution path.

In another preferred embodiment of the inventive method, the resolution of the set-point value can be tailored adaptively to set-point control requirements.

The inventive apparatus for regulating a load-line of a power converter is extended to a power system consisting of a plurality of power converters connected in parallel to increase the current delivery capability of the whole power system, meaning for high current requirement multiple power converters are paralleled. The load current must be equally distributed between power converters. So, the object of the invention will also be solved by a power system comprising a plurality of power converters connected in parallel using the apparatus according to claims 1 to 4 for each power converter wherein a current sharing controller balances a current delivered by each of the power converters of the power system.

Due to parasitic resistances in the interconnections between the power converters the load current is not equally distributed between the power converters. A difference in trace and other parasitic resistance in the interconnection between power converters cause an imbalance between currents delivered by each power converter. This leads to the problem that some of the power converters are more subject to thermal stress because their current delivery is higher than their neighbor power converters. Therefore, an additional controller, called current sharing controller, is employed to balance the current delivered by each power converter. The current sharing is achieved by dynamically controlling the set-point value of each power converter. The set-point correction for current balancing is independent from the set-point correction value related to AVP control.

In a preferred embodiment such a controller generates an additional variation of set-point value such that the current sourced by the power converters equals a target current. The target current can be either generated internally in each power converter or in another embodiment distributed to the power modules by means of a specific interface. It has to be noticed that the set-point correction to achieve current balance between the power modules comes on top of the AVP control and it is independent of whether the power converter operates under AVP control or not. So, in a preferred embodiment of the power system the set-point correction achieving current balance between the power converters of the power system is performed on top of an adaptive voltage position control and in another embodiment the set-point correction is not dependent of whether the adaptive voltage position control procedure in the power converters is performed or not.

In other words, given a target current value, the local set-point of each power converter is dynamically lowered or increased to control the current being delivered by the power converter itself so to track the target current. Such control action can be used alone to achieve current sharing between paralleled power converters implementing constant supply voltage regulation or it is combined with AVP control to provide adaptive voltage positioning control while at the same time balancing the current delivery of each power converter. Being both current sharing and AVP based on droop control their control action is applied to the set-point DAC to control local set-point voltage. The set-point correction information is split into coarse information, to be provided to set-point DAC, and fine resolution information, to be added to the error voltage. The high precision current sharing and adaptive voltage positioning control is advantageously then achieved.

As for the case of AVP control, precision of the current balancing is directly related to the resolution of the set-point DAC and therefore the same method disclosed in this invention is used for this purpose. Indeed by splitting the control action of the set-point DAC into a coarse and fine resolution information precise current balancing between the power converters is achieved without overstressing performance requirement of the set-point DAC.

In another preferred embodiment of the power system the power converters connected in parallel are multi-phase power converters having N phases, whereas N is the number of inductors of a power converter. A plurality of multi-phase power converters can be used to supply high current demanding loads. The dedicated current balancing controller is used to equally distribute current delivery through the N inductors of a multi-phase power converter. The current balancing action must act on duty cycle value since the local set-point is common to the N inductors. The multi-phase power converters can be in turn paralleled to further increase the current delivery capability of the power system. For that, a current share controller is used to equally distribute current delivery through power converters connected in parallel. The droop control is used to adjust local set-point value to provide equal current delivery in each power converter. Advantageously, the current sharing can be combined with AVP control to provide adaptive voltage positioning while at the same time balancing the current delivery of each power converter.

The invention will be explained in more detail using exemplary embodiments.

The appended drawings show
- Fig. 1: A power system with a single power converter (state of the art);
- Fig. 2: Load transient waveforms of a power controller without a load-line control (state of the art);
- Fig. 3: Load transient waveforms of a power controller with a load-line control (state of the art);
- Fig. 4: A digital PWM controller implementing adaptive voltage control (state of the art);
- Fig. 5: The inventive digital PWM controller with adaptive voltage positioning control using two parallel regulation paths with different resolution;
- Fig. 6: A power system with a plurality of paralleled power converter;
- Fig. 7: A digital PWM controller with AVP and current sharing;
- Fig. 8: A power system with a plurality of paralleled multi-phase power converter;
- Fig. 9: A multi-phase digital PWM controller with AVP and current sharing.

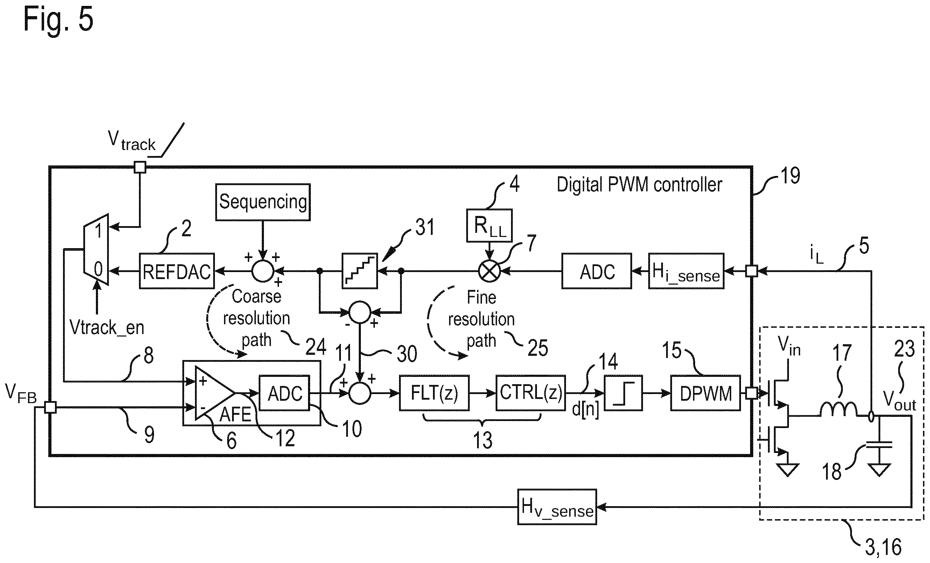

Figure 5 shows the inventive digital power controller with adaptive voltage positioning control and a first coarse resolution path 24 configured to drive the DAC 2 directly with the digital signal representing the measurement of the current 5 being delivered by the power converter 3 and a second fine resolution path 25 configured to carry a set-point information with an amplitude smaller than the set-point resolution of the DAC 2 whereas the information is added to the output 11 of the analogue-to-digital converter 10 converting the error signal 12 into a digital error signal. The apparatus for regulating the load-line of a power converter 3 comprising a digital PWM controller 19 implementing an active voltage positioning control scheme comprising a set-point digital-to-analog converter 2 driven by a digital signal representing a measurement of a current 5 being delivered by a power converter 3 multiplied 7 by a load-line resistance 4 to convert the current value 5 into a voltage value to be applied to the set-point DAC 2, an error amplifier 6 used to compare an output 8 of the set-point DAC 2 with a supply voltage 9 to be regulated, an analog-to-digital converter 10 to convert the error signal output 12 by the error amplifier 6 into a digital signal, a digital controller 13 that generates a control signal 14 to be used to regulate both the output voltage 23 and an inductor current 5 of a power converter 3 and a digital PWM block 15 to convert the digital control signal into a pulse having a pulse-width proportional to the digital control signal and a fixed repetition period.

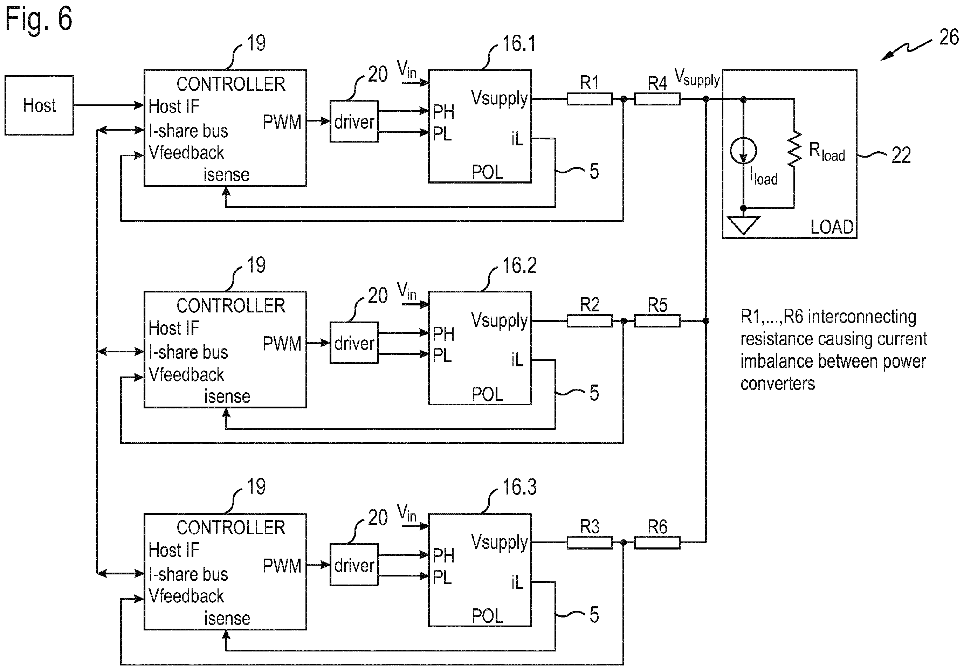

Figure 6 shows the extension of the inventive apparatus to a power system 26 with paralleled power converters 16.1...16.3. R1 to R6 represent interconnection resistances causing current imbalances between the power converters 16.1...16.3. The apparatus as claimed can be used in such a power system 26 in order to regulate these imbalances between the power converters 16.1...16.3 without limiting the precision of the control action on the set-point value by using a set-point DAC 2 with a reduced resolution, worse linearity and monotonicity. Due to the inventive apparatus and method as claimed a high resolution DAC 2 with high linearity and monotonicity characteristics can still be used without increasing the power consumption and chip area of the whole system.

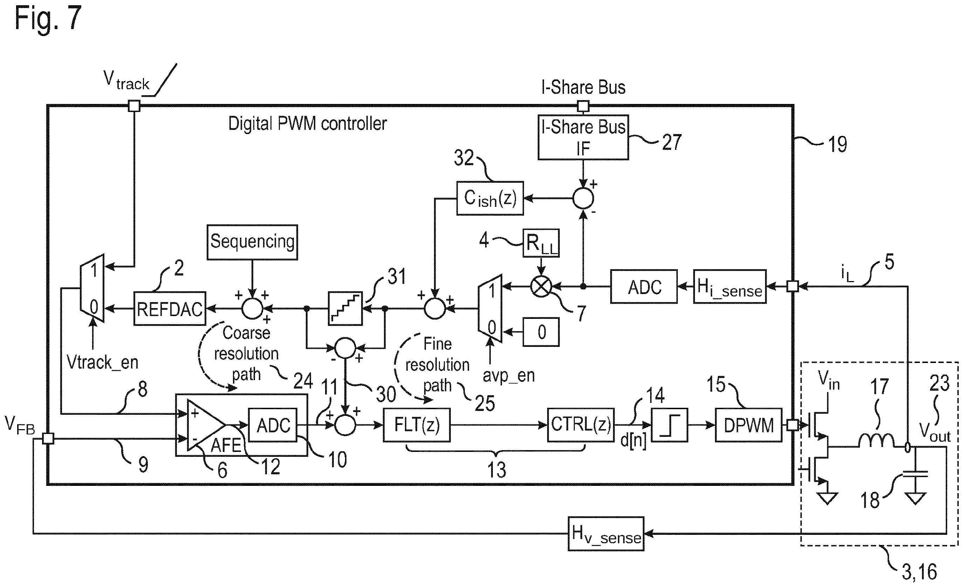

Figure 7 shows a digital PWM controller with adaptive voltage positioning control and inventive current sharing. Given a target current value, the local set-point of each power converter 3 is dynamically lowered or increased to control the current 5 being delivered by the power converter 3 itself so to track the target current. Such control action can be used alone to achieve current sharing between paralleled power converters 16.1...16.3 implementing constant supply voltage regulation or it is combined with AVP control to provide adaptive voltage positioning while at the same time balancing the current delivery of each power converter 16.1...16.3. Being both current sharing and AVP based on droop control their control action is applied to the set-point DAC 2 to control local set-point voltage. The set-point correction information is split into coarse information 24, to be provided to set-point DAC 2, and fine resolution information 25, to be added to error voltage 11. The high precision current sharing and adaptive voltage positioning is advantageously then achieved.

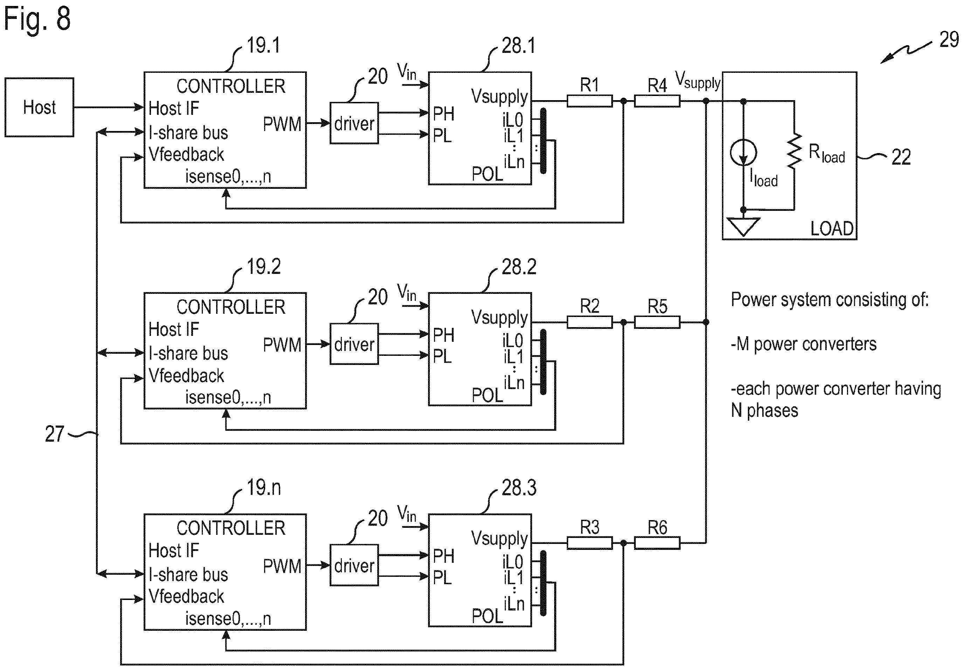

Figure 8 shows a power system with a plurality of paralleled multi-phase power converters 29. The power system consists of M power converters 28.1...28.3 whereas each power converter having N inductors. A plurality of multi-phase power converters 28.1...28.3 can be used to supply high current demanding loads. The three power converters connected in parallel shown in figures 6 and 8 are just an examples, more power converters can be connected in parallel. A dedicated current balancing controller inside each power controller is used to equally distribute current delivery through the N inductors of a multi-phase power converter, for example the multi-phase converter 28.1. The current balancing action must act on duty cycle value since the local set-point is common to the N inductors. The multi-phase power converters 28.1...28.3 can be in turn paralleled to further increase the current delivery capability of the power system 29. For that, a current share controller 27 is used to equally distribute current delivery through the M power converters connected in parallel. The droop control is used to adjust local set-point value to provide equal current delivery in each power converter. Advantageously, the current sharing can be combined with AVP control to provide adaptive voltage positioning while at the same time balancing the current delivery of each power converter 28.1...28.3.

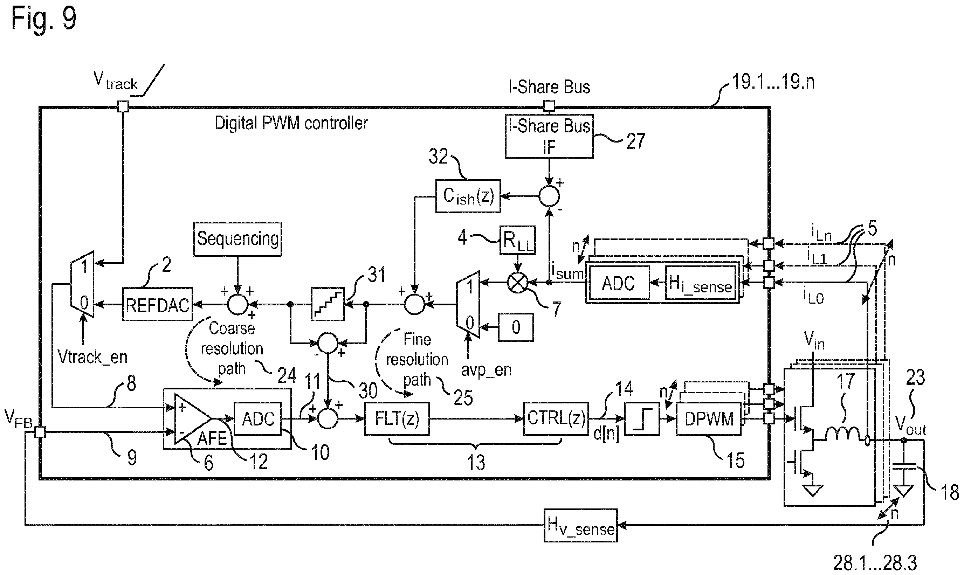

Figure 9 shows the inventive apparatus used in a multi-phase digital PWM controller 28.1...28.3 with AVP and current sharing. The benefits of the invention are a precise control of converter set-point voltage which can be achieved without overstressing the set-point DAC 2 requirements, so the design complexity of the DAC 2 can be reduced as well as the power consumption and chip area. Also the set-point resolution can be easily tailored to the specific application which reduces the system complexity.

In summary the inventive method achieves precise set-point control for the purpose of introducing a load-line resistance in the converter output impedance to implement AVP control and balancing the current delivery between a plurality of power converters 28.1...28.3 connected in parallel.

### Reference signs

- 1: digital PWM controller
- 2: set-point digital-to-analog converter
- 3: power converter
- 4: load-line resistance
- 5: inductor current of a power converter
- 6: error amplifier
- 7: multiplier
- 8: output of the set-point DAC
- 9: supply voltage to be regulated
- 10: analog-to-digital converter
- 11: output of the analog-to-digital converter
- 12: error signal
- 13: digital controller
- 14: control signal
- 15: digital PWM block
- 16: 16.1, 16.2, 16. 3,... point of load (POL) or power converters connected in parallel
- 17: inductor
- 18: capacitor
- 19: 19.1... 19.n PWM power controller
- 20: driver
- 21: input voltage unit
- 22: load
- 23: voltage to be regulated
- 24: coarse resolution path
- 25: fine resolution path
- 26: power system with paralleled power converters
- 27: current share bus
- 28: 28.1, 28.2, 28.3 multi-phase power converter
- 29: power system with a plurality of paralleled multi-phase power converters
- 30: set-point information
- 31: means for adding an offset to the digital error signal
- 32: current sharing controller

## Claims

1. Apparatus for regulating a load-line of a power converter comprising a digital PWM controller (1) implementing an active voltage positioning control scheme comprising a set-point digital-to-analog converter (2) driven by a digital signal representing a measurement of a current (5) being delivered by a power converter (3,16) multiplied by a load-line resistance (4) to convert the current value (5) into a voltage value to be applied to the set-point DAC (2), an error amplifier (6) used to compare an output (8) of the set-point DAC (2) with a supply voltage (9) to be regulated, an analog-to-digital converter (10) to convert the error signal output (12) by the error amplifier (6) into a digital signal, a digital controller (13) that generates a control signal (14) to be used to regulate both the output voltage (23) and an inductor current (5)of a power converter (3,16) and a digital PWM block (15) to convert the digital control signal into a pulse having a pulse-width proportional to the digital control signal and a fixed repetition period wherein a first coarse resolution path (24) configured to drive the DAC (2) directly with the digital signal representing the measurement of the current (5) being delivered by the power converter (3,16) and a second fine resolution path (25) configured to carry a set-point information (30) with an amplitude smaller than the set-point resolution of the DAC (2) whereas the information (30) is added to the output (11) of the analogue-to-digital converter (10) converting the error signal (12) into a digital error signal.

2. Apparatus for regulating a load-line of a power converter according to claim 1, wherein the power converter (3,16) is a buck converter.

3. Apparatus for regulating a load-line of a power converter according to claim 1, wherein the fine resolution path (25) comprises means (31) for adding an offset to the digital error signal, whereas the offset is corrected by the digital controller (13) by driving the regulated voltage to a desired set-point.

4. Apparatus for regulating a load-line of a power converter according to claim 1, wherein the first coarse resolution path (24) and the second fine resolution path (25) configured in parallel.

5. Method for controlling a load line of a power converter to a desired set-point value using the apparatus according to claim 1 comprising the following steps:
- driving a digital-to-analog converter (DAC) (2) directly with a digital signal representing the measurement of a current (5) being delivered by a power converter (3,16) in a first coarse resolution path (24);
- carrying a set-point value information (30) for a digital PWM controller (19) with an amplitude smaller than a set-point resolution of the DAC (2) whereas the information (31) is added to an output (11) of an analog-to-digital converter (6) converting the error signal (12) into a digital error signal in a second fine resolution path (25);
- correcting the offset by a digital controller (13) by driving the regulated voltage to the desired set-point value.

6. Method for controlling a load-line of a power converter according to claim 5, wherein the resolution of the set-point value is only dependent on the resolution of the digital error signal in the fine resolution path (25).

7. Method for controlling a load-line of a power converter according to claim 6, wherein the resolution of the set-point value can be tailored adaptively to set-point control requirements.

8. Power system comprising a plurality of power converters connected in parallel using the apparatus according to claims 1 to 4 for each power converter (3,16) wherein a current sharing controller (32) balances a current delivered by each of the power converters (3,16) of the power system.

9. Power system according to claim 8, wherein the current sharing controller (32) generates an additional variation of set-point value such that the current sourced by the power converters equals a target current.

10. Power system according to claim 9, wherein the target current is generated internally in each power converter.

11. Power system according to claim 9, wherein the target current is distributed to the power converters by means of a specific interface (27).

12. Power system according to one of the former claims, wherein the set-point correction achieving current balances between the power converters of the power system is performed on top of an adaptive voltage position control.

13. Power system according to one of the former claims, wherein the set-point correction is independent of performing the adaptive voltage position control procedure in the power converters or not.

14. Power system according to one of the former claims, wherein the power converters connected in parallel are multi-phase power converters (28) having N phases, whereas N is the number of inductors of the power converter.
